**Europäisches Patentamt**

**European Patent Office**

**Office européen des brevets**

(11) Publication number: **0 044 285**
**B1**

(12) **EUROPEAN PATENT SPECIFICATION**

(45) Date of publication of patent specification: **08.03.89**

(21) Application number: **81830106.1**

(22) Date of filing: **02.07.81**

(51) Int. Cl.⁴: **G 01 S 13/52**, G 01 S 13/24, G 01 S 7/36

(54) Adaptive Doppler filtering device for external clutter and ECM situations in radar equipment.

(30) Priority: **16.07.80 IT 4925180**

(43) Date of publication of application:
**20.01.82 Bulletin 82/03**

(45) Publication of the grant of the patent:
**08.03.89 Bulletin 89/10**

(84) Designated Contracting States:
**DE FR GB NL SE**

(56) References cited:
**WO-A-80/02327**
**DE-A-2 434 732**
**FR-A-2 162 516**
**US-A-3 046 547**
**US-A-3 381 292**
**US-A-3 406 400**
**US-A-4 137 533**
**US-A-4 173 017**

The file contains technical information
submitted after the application was filed and
not included in this specification

(73) Proprietor: **SELENIA INDUSTRIE
ELETTRONICHE ASSOCIATE S.p.A.
Via Tiburtina, KM 12.400
I-00131 Roma (IT)**

(72) Inventor: **Bettini, Giuliano
Via Palmioli, 17
I-00015 Monterotondo (Roma) (IT)**
Inventor: **Penso, Luigi
Via Appia Km. 51
Cisterna (LT) (IT)**
Inventor: **Rodriguez, Giuseppe
Via Alberico II, 11
Roma (IT)**

(74) Representative: **Gustorf, Gerhard, Dipl.-Ing.
Patentanwalt Dipl.-Ing. Gerhard Gustorf
Mühlenstrasse 1
D-8300 Landshut (DE)**

(56) References cited:
**H. URKOWITZ: "BLock frequency diversity
radar technique", RCA Technical Notes, no.
900, 20th December 1971, RCA, pages 1-7
Princeton, U.S.A.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention refers to a doppler filtering device adaptive to external clutter and responsive to the detection of clutter and ECM situations in radar equipment.

In particular the invention refers to a device which makes possible, by acting on the sequence of the transmitted frequencies or codes and on the filter configuration, to obtain the best compromise between the transmission technique at fixed frequencies and the one based on frequency agility, according to the environment situation, which depends on the presence of clutter and to the needs of ECCM.

Given a certain situation of clutter and ECM, the device according to the invention makes possible the choice of the filter configuration and the transmission sequence of transmitted frequencies or codes which ensures minimum residues at the output. The frequency change and the change of the transmitted code can be made as an alternative or in conjunction.

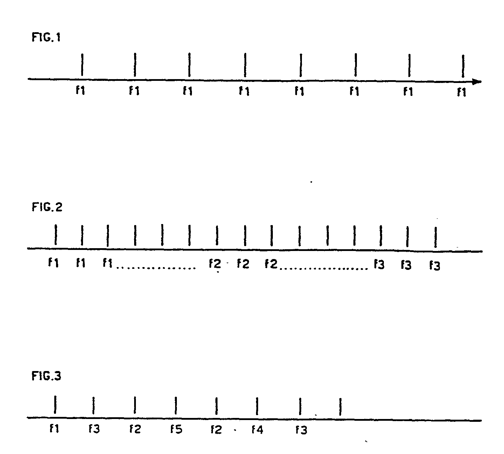

It is well known in radar applications the need of filtering fixed echoes, clutter, etc., imposes, in order to cancel these echoes, the transmission at fixed frequency, since it is the only technique capable of performing said cancellation between received signals at identical frequencies (see fig. 1).

Alternatively a technique commonly called frequency diversity is used. This consists of transmitting bursts of pulses having the same frequency in each burst but having different frequencies between one burst and another. In such a case filtering is carried out between signals belonging to the same burst and thus having the same frequencies (see fig. 2).

Both techniques, in addition to the advantage of easily being able to cancel the undesired echoes, have the disadvantage of being easily subjected to an ECM disturbance action.

In a situation where disturbance actions are predictable it becomes necessary that the radar reacts by changing as quickly as possible and in a random way the transmission frequency such that a possible disturbance source is not allowed to lock onto the transmitted frequencies (see fig. 3).

This technique is commonly known as frequency agility.

The number of different frequencies transmitted depends on the available frequencies in the radar. It is obvious that in this case the easy and advantageous anti-disturbance action is counteracted by the impossibility of utilizing doppler filtering for eliminating undesired echoes from the surrounding environment (land, rain, etc.).

The two solutions described, that is transmission at fixed frequency and the technique based on frequency agility are presented as two extreme cases each having advantages and disadvantages.

Obviously, a device which allows adjustment of the optimum working conditions within the limits of the extreme cases, as required by the instantaneous environment conditions, is desirable. Such a device will allow to choose the working condition in a manner to approximate the fixed frequency condition when many clutter echoes are present and little ECCM action is needed, while shifting towards the frequency agility type condition when there are few clutter echoes and a high necessity of anti-disturbance action.

With this situation in mind it is the problem underlying the invention to overcome the inconveniences of the two situations described above, that is, operation at fixed frequency which allows signal filtering but which is subjected to disturbance action, and operation with frequency agility which avoids or at least renders more difficult the disturbance action but which does not allow useful filtering, and to provide a device, which allows to have the optimum working conditions, depending on the detected environmental situation.

The present invention as defined in the single claim overcomes the disadvantages of both fixed frequency and frequency agility transmission and benefits from the advantages of both techniques.

The invention is described with reference to the figures, in which

Figure 1 illustrates the sequence of the transmission frequencies in the case of fixed frequencies,

Figure 2 illustrates the sequence of the transmission frequencies in frequency diversity,

Figure 3 illustrates the sequence in frequency agility in the case of a radar with 5 available frequencies,

Figure 4 schematically demonstrates the filtering principle according to the invention and

Figure 5 demonstrates by means of a block diagram the device according to this invention.

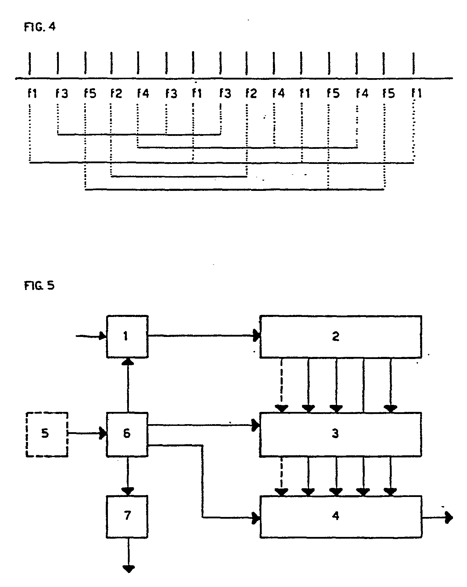

The filtering operation is carried out on samples marked by the same frequency but which are not typically in adjacent sweeps (fig. 4).

Observing the block diagram in fig. 5, we can see represented with 1 a block where the signal from the receiver arrives and is then forwarded to a memory 2. A multiplexer, which transfers the last m sweeps from the memory to a filter 4, is indicated with 3. A device for environment analysis which sends the relative information to a timing and synchronising circuit 6, is indicated with 5. Circuit 6 also controls the selection of one of the frequencies generated by a generator 7 which then sends the selected frequency to the transmitter (not shown).

The device functions in the following way:

At the instant of reception of the sweep corrponding to the present transmission frequency fk, the timing and synhronising circuit 6 enables the multiplexer 3, transferring from the memory 2 to the filter 4 the last m sweeps, all having frequencies fk onto which the filtering is to be carried out. The circuitry shown is a doppler filtering device operating in the presence of frequency agility and/or codes even from sweep to sweep. This device is characterized by the ability of acting on the sequence of transmitted frequencies and on the filter configuration, on the basis of data collected from the surrounding environment situation as related to the clutter presence and to the needs of ECCM.

The external environment analysis device 5 supplies the relative information to the timing circuit 6, which in turn enables the multiplexer 3 to transfer from memory 2 to the m weight filter 4 the signals related to the last m sweeps therefore imposing the said timer signal on the said m weight filter 4 and on the frequency generator 7 to select a frequency fk to be forward to the transmitter. The memory 2 memorizes the received samples for n sweeps, where n is limited by the number of impulses in the antenna beam at -3dB.

The frequency generation system 7 is capable of maintaining the in phase coherence of the transmitted frequencies for at least the n sweeps.

The timing and synchronising circuit 6 commands the emission of the various frequencies, and memorizes the sequence of the transmitted frequencies in the preceeding sweeps.

The timing circuit is also intended for controlling the multiplexer 3 and determining the number of samples and type of filter weight needed as a function of the sequence of the transmitted frequencies and of the clutter present.

The multiplexer 3 permits to forward to the filtering circuit 4 m (m < n) pulses related to the same transmission frequency and on which the filtering is to be carried out.

The m-weight filter operates the filtering on the m samples.

## Claim

A doppler filtering device for a frequency or code agile radar system transmitting, in successive sweeps, electromagnetic signals each of which has a frequency or code selected from a predetermined number of frequencies or codes, said radar system being arranged to ensure phase coherence of the transmitted signals for a predetermined number n of sweeps, the filtering device comprising an adaptive clutter rejection filter (4) of order m with m being less than n, the characteristics of this filter being variable by adjustment of its weight factors, the filtering device being characterised by

a memory (2) for storing the echo signals received in response to n successive sweeps,

a multiplexer (3) connecting the memory with the clutter rejection filter,

detector means (5) arranged to provide data representative of the presence of clutter and ECM, respectively,

a timing and synchronizing circuit (6) arranged to supply, in response to the data from the detector means, command signals effecting as a function of the presence of clutter or ECM

(i) the selection of the frequency or the code of the electromagnetic signal transmitted by the radar system in the subsequent sweep,

(ii) the transfer from the memory (2) to the filter (4) of the echo signals obtained in m preceding sweeps at the frequency or code corresponding to the frequency or code selected for the subsequent sweep,

(iii) the adjustment of the filter weight factors in accordance with the selected frequency or code.

## Patentanspruch

Dopplerfiltereinrichtung für ein frequenz- oder codeveränderliches Radarsystem, das bei aufeinanderfolgenden Meßlinien elektromagnetische Signale aussendet, bei denen jedes eine Frequenz oder einen Code aufweist, die bzw. der aus einer vorbestimmten Anzahl von Frequenzen oder Codes ausgewählt ist, wobei das Radarsystem derart ausgebildet ist, daß eine Phasenkohärenz der gesendeten Signale bei einer vorbestimmten Anzahl n von Meßlinien gewährleistet ist, die Filtereinrichtung ein adaptives Störfleck-Sperrfilter (4) der Ordnung m mit m kleiner als n aufweist, und die Kennlinien dieses Filters durch Einstellung seiner Wichtungsfaktoren veränderlich sind, gekennzeichnet durch

einen Speicher (2) zum Speichern von Echosignalen, die in Abhängigkeit von n aufeinanderfolgender Meßlinien empfangen werden,

einen Multiplexer (3), der den Speicher mit dem Störfleck-Sperrfilter verbindet,

—eine Detektoreinrichtung (5), die derart ausgebildet ist, daß sie Daten liefert, die repräsentativ sind für das Vorhandensein von Störflecken bzw. ECM,

—eine Zeitsteuer- und Synchronisierschaltung (6), die derart ausgebildet ist, daß sie ansprechend auf von der Detektoreinrichtung kommende Daten Befehlssignale liefert, die als Funktion des Vorhandenseins von Störflecken oder ECM folgendes bewirken:

(i) die Auswahl der Frequenz oder des Codes des von dem Radarsystem bei der nachfolgenden Meßlinie ausgesendeten elektromagnetischen Signals,

(ii) den Transfer von Echosignalen, die bei m vorausgehenden Meßlinien erhalten wurden bei der Frequenz oder dem Code, die bzw. der der für die nachfolgende Meßlinie ausgewählten Frequenz oder Code entspricht, aus dem Speicher (2) zu dem Filter (4),

(iii) Einstellen der Filter-Wichtgungsfaktoren nach Maßgabe der ausgewählten Frequenz oder des ausgewählten Codes.

## Revendication

Un dispositif de filtrage Doppler pour un système radar agile en fréquence transmettant en code, en explorations successives, des signaux électromagnétiques dont chacun possède une fréquence ou un code choisi dans un nombre prédéterminé de fréquences ou codes, ledit système radar étant disposé pour assurer la cohérence de phase des signaux transmis pour un nombre prédéterminé n d'explorations, le dispositif de filtrage comprenant un filtre (4) de rejet de fouillis susceptible d'adaptation d'ordre m avec m <n, les caractéristiques de ce filtre étant variables par réglage de ces facteurs de pondération, le dispositif de filtrage étant caractérisé par,

une mémoire (2) pour mémoriser les signaux d'échos reçus en réponse au n explorations successives,

un multiplexeur (3) reliant la mémoire avec le filtre de rejet de fouillis,

des moyens détecteurs (5) disposés pour fournir des données représentatives de la présence de fouillis et de contre-mesures électroniques, respectivement,

un circuit de mesure de temps et de synchronisation (6) disposé pour fournir, en réponse aux données provenant des moyens détecteurs, des signaux de commande effectuant en fonction de la présence de fouillis ou de contre-mesures électroniques,

(i) le choix de la fréquence ou du code de signal électromagnétique transmis par le système radar dans l'exploration suivante,

(ii) le transfert de la mémoire (2) au filtre (4) des signaux d'échos obtenus dans les m explorations précédentes à la fréquence ou au code correspondant à la fréquence ou au code choisi pour l'exploration suivante,

(iii) le réglage des facteurs de pondération de filtre en fonction de la fréquence ou du code choisi.

FIG.1

| | | | | | | | |
f1    f1    f1    f1    f1    f1    f1    f1

FIG.2

| | | | | | | | | | | | | |
f1   f1   f1................  f2 · f2   f2....................  f3   f3   f3

FIG.3

| | | | | | | | |
f1    f3    f2    f5    f2  ·  f4    f3

FIG. 4

| f1 | f3 | f5 | f2 | f4 | f3 | f1 | f3 | f2 | f4 | f1 | f5 | f4 | f5 | f1 |

FIG. 5

```
        ┌───┐              ┌──────────────────────┐
───────▶│ 1 │─────────────▶│          2           │
        └───┘              └──────────────────────┘
          ▲                   │  │  │  │  │
          │                   ▼  ▼  ▼  ▼  ▼
┌───┐   ┌───┐              ┌──────────────────────┐
│ 5 │──▶│ 6 │─────────────▶│          3           │
└───┘   └───┘              └──────────────────────┘
          │     │             │  │  │  │  │
          ▼     │             ▼  ▼  ▼  ▼  ▼
        ┌───┐   │          ┌──────────────────────┐
        │ 7 │   └─────────▶│          4           │──────▶
        └───┘              └──────────────────────┘
          │
          ▼
```